(19) **Europäisches Patentamt / European Patent Office / Office européen des brevets**

(11) **EP 4 468 426 A1**

(12) **EUROPÄISCHE PATENTANMELDUNG**

(43) Veröffentlichungstag:
27.11.2024 Patentblatt 2024/48

(21) Anmeldenummer: 23175592.7

(22) Anmeldetag: 26.05.2023

(51) Internationale Patentklassifikation (IPC):
H01M 8/18 (2006.01)  G05F 5/00 (2006.01)

(52) Gemeinsame Patentklassifikation (CPC):
H01M 8/18; H01M 8/188

(84) Benannte Vertragsstaaten:
AL AT BE BG CH CY CZ DE DK EE ES FI FR GB GR HR HU IE IS IT LI LT LU LV MC ME MK MT NL NO PL PT RO RS SE SI SK SM TR
Benannte Erstreckungsstaaten:
BA
Benannte Validierungsstaaten:
KH MA MD TN

(71) Anmelder: Primetals Technologies Germany GmbH
91058 Erlangen (DE)

(72) Erfinder: Weinzierl, Klaus
90480 Nürnberg (DE)

(74) Vertreter: Metals@Linz
Primetals Technologies Austria GmbH
Intellectual Property Upstream IP UP
Turmstraße 44
4031 Linz (AT)

(54) **BETRIEBSVERFAHREN FÜR EINEN ELEKTRISCHEN ENERGIESPEICHER**

(57) Eine Steuereinrichtung (27) eines elektrischen Energiespeichers nimmt Informationen entgegen, die für eine dem elektrischen Energiespeicher zugeführte elektrische Energie und eine dem elektrischen Energiespeicher zugeführte Wärmemenge oder Wärmeenthalpie charakteristisch sind. Die Steuereinrichtung (27) ermittelt unter Verwertung der ihr zugeführten Informationen einen Wert (W, V) eines thermodynamischen Potenzials. Der Wert (W, V) des thermodynamischen Potenzials ändert sich sowohl bei einem Zuführen elektrischer Energie zu dem elektrischen Energiespeicher als auch bei einem Zuführen einer Wärmemenge oder Wärmeenthalpie zu dem elektrischen Energiespeicher. Die Steuereinrichtung (27) ermittelt unter Verwertung des ermittelten Wertes (W, V) des thermodynamischen Potenzials eine Zustandsgröße (Z) des elektrischen Energiespeichers. Alternativ oder zusätzlich ermittelt sie unter Verwertung des ermittelten Wertes (W, V) des thermodynamischen Potenzials Steuerbefehle (P1 bis P4, W1 bis W4), mittels derer der elektrische Energiespeicher gesteuert wird, und steuert den elektrischen Energiespeicher entsprechend an.

**FIG 3**

S1 — $W = W0$

S2 — $E^*$

S3 — $P1... P4, W1... W4$
$Pi = f(E^*, W)$
$Wi = f(E^*, W)$

S4 — $P1... P4, W1... W4 \rightarrow$

S5 —

S6 — $dW = TdS + UdQ$

S7 — $W = W + dW$

S8 — $Z = f(W)$

EP 4 468 426 A1

**Beschreibung**

Gebiet der Technik

Die vorliegende Erfindung geht aus von einem Betriebsverfahren für einen elektrischen Energiespeicher,

- wobei eine Steuereinrichtung des elektrischen Energiespeichers Informationen entgegennimmt, die für eine dem elektrischen Energiespeicher zugeführte elektrische Energie und eine dem elektrischen Energiespeicher zugeführte Wärmemenge oder Wärmeenthalpie charakteristisch sind.

Die vorliegende Erfindung geht weiterhin aus von einem Steuerprogramm für eine Steuereinrichtung für einen elektrischen Energiespeicher, wobei das Steuerprogramm Maschinencode umfasst, der von der Steuereinrichtung abarbeitbar ist, wobei die Abarbeitung des Maschinencodes durch die Steuereinrichtung bewirkt, dass die Steuereinrichtung den elektrischen Energiespeicher gemäß einem derartigen Betriebsverfahren steuert.

Die vorliegende Erfindung geht weiterhin aus von einer Steuereinrichtung für einen elektrischen Energiespeicher, wobei die Steuereinrichtung mit einem derartigen Steuerprogramm programmiert ist, so dass die Steuereinrichtung bei Abarbeitung des Maschinencodes des Steuerprogramms den elektrischen Energiespeicher gemäß einem derartigen Betriebsverfahren steuert.

Die vorliegende Erfindung geht weiterhin aus von einem elektrischen Energiespeicher,

- wobei der elektrische Energiespeicher Informationseinrichtungen aufweist, von denen Informationen generierbar sind, die für eine dem elektrischen Energiespeicher zugeführte elektrische Energie und eine dem elektrischen Energiespeicher zugeführte Wärmemenge oder Wärmeenthalpie charakteristisch sind,
- wobei der elektrische Energiespeicher eine Steuereinrichtung aufweist, die zum Entgegennehmen der von den Informationseinrichtungen generierten Informationen mit den Informationseinrichtungen datentechnisch verbunden ist,
- wobei die Steuereinrichtung als derartige Steuereinrichtung ausgebildet ist.

Stand der Technik

Elektrische Energiespeicher sind in verschiedensten Ausgestaltungen bekannt, beispielsweise in Form von Schwungspeichern, Pumpkraftwerken und elektrochemischen Speichern. Die vorliegende Erfindung betrifft elektrochemische Speicher. Auch wenn im Rahmen der vorliegenden Erfindung von elektrischen Energiespeichern allgemein die Rede ist, sind stets elektrochemische Speicher gemeint.

Elektrische Energiespeicher können von sehr klein bis sehr groß dimensioniert werden, beispielsweise angefangen bei kleinen Akkus, wie sie in Haushalten verwendet werden, über Starter- oder Antriebsbatterien von Kraftfahrzeugen bis zu großtechnischen elektrochemischen Speichern. In technologischer Hinsicht unterscheidet man beispielsweise zwischen Speichern auf Basis von Lithium-Ionen, auf Basis von Li-FePO4, auf Basis von Natrium-Ionen, auf Basis von Natrium-Schwefel, Redox-Flow-Akkumulatoren und andere mehr.

Es ist bekannt, dass beim Betrieb eines elektrochemischen Speichers der elektrische Ladungszustand nicht isoliert betrachtet werden kann, sondern dass zusätzlich auch andere Größen berücksichtigt werden müssen, insbesondere die Temperatur des elektrochemischen Speichers. Es besteht also eine Kopplung zwischen der in dem Speichermedium des Energiespeichers enthaltenen Wärmeenergie und der elektrischen Energie. Es führt daher zu einer Verringerung des elektrischen Wirkungsgrades, wenn ein derartiger elektrischer Energiespeicher bei einer Temperatur, bei welcher der elektrische Energiespeicher "besser" ist, geladen wird und später bei einer anderen Temperatur, bei welcher der elektrische Energiespeicher "schlechter" ist, entladen wird. Umgekehrt führt es zu einer Steigerung des elektrischen Wirkungsgrades, wenn ein derartiger elektrische Energiespeicher bei einer Temperatur, bei welcher der elektrische Energiespeicher "schlechter" ist, geladen wird und später bei einer anderen Temperatur, bei welcher der elektrische Energiespeicher "besser" ist, entladen wird. Besonders stark ist dieser Effekt bei Redox-Flow-Akkumulatoren.

Die entsprechenden Sachverhalte sind beispielsweise aus einem Eintrag im Internet bekannt, den die Anmelderin unter der URL https://www.sandia.gov/ess/projects/batteries am 26.04.2023 aus dem Internet abgerufen hat.

Zusammenfassung der Erfindung

Die Beschreibungen des Standes der Technik für die Ansteuerung des elektrischen Energiespeichers und für den Zustand eines elektrischen Energiespeichers haben die Temperatur entweder völlig ignoriert oder aber sie lediglich empirisch berücksichtigt.

Die Aufgabe der vorliegenden Erfindung besteht darin, Möglichkeiten zu schaffen, mittels derer der elektrische Energiespeicher besser modelliert und basierend auf der besseren Modellierung auf bessere Art und Weise betrieben werden kann.

Die Aufgabe wird durch ein Betriebsverfahren mit den Merkmalen des Anspruchs 1 gelöst. Vorteilhafte Ausgestaltungen des Betriebsverfahrens sind Gegenstand der abhängigen Ansprüche 2 bis 5.

Erfindungsgemäß wird ein Betriebsverfahren der eingangs genannten Art dadurch ausgestaltet,

- dass die Steuereinrichtung unter Verwertung der ihr zugeführten Informationen einen Wert eines thermodynamischen Potenzials ermittelt,
- dass der Wert des thermodynamischen Potenzials sich sowohl bei einem Zuführen elektrischer Energie zu dem elektrischen Energiespeicher als auch bei einem Zuführen einer Wärmemenge oder Wärmeenthalpie zu dem elektrischen Energiespeicher ändert und
- dass die Steuereinrichtung unter Verwertung des ermittelten Wertes des thermodynamischen Potenzials eine Zustandsgröße des elektrischen Energiespeichers ermittelt und/oder unter Verwertung des ermittelten Wertes des thermodynamischen Potenzials Steuerbefehle, mittels derer der elektrische Energiespeicher gesteuert wird, ermittelt und den elektrischen Energiespeicher entsprechend ansteuert.

Die vorliegende Erfindung beruht also auf dem Ansatz, dass der Steuereinrichtung nicht nur Größen zugeführt werden, die für die dem elektrischen Energiespeicher zugeführte elektrische Energie charakteristisch sind. Vielmehr werden der Steuereinrichtung zusätzlich auch Größen zugeführt, die - allein oder in Verbindung mit den charakteristischen Größen für die dem elektrischen Energiespeicher zugeführte elektrische Energie - für die dem elektrischen Energiespeicher zugeführte Wärmeenergie oder Wärmeenthalpie charakteristisch sind. Negative Werte bezeichnen hierbei eine Entnahme elektrischer Energie bzw. eine Abgabe von Wärmeenergie oder Wärmeenthalpie. Sodann wird eine Modellierung auf Basis der Thermodynamik durchgeführt. Es wird also exakt modelliert, wie sich der elektrische Energiespeicher verhält, wenn er geladen und entladen wird.

Für die innere Energie W des elektrischen Energiespeichers gilt die Gleichung

$$dW = TdS + UdQ \qquad (1)$$

T ist die Temperatur, S die Entropie. TdS ist die dem elektrischen Energiespeicher zugeführte (inkrementelle) Wärmeenergie. In analoger Weise ist U die elektrische Spannung, welche der elektrische Energiespeicher im Leerlauf aufweist, Q die elektrische Ladungsmenge. UdQ ist die dem elektrischen Energiespeicher zugeführte (inkrementelle) elektrische Energie. Die innere Energie des elektrischen Energiespeichers stellt eine untrennbare Einheit dar. Sie kann und darf nicht in einen Anteil für die elektrische Energie und die Wärmeenergie aufgeteilt werden.

Die innere Energie ist ein thermodynamisches Potenzial des elektrischen Energiespeichers. Für das thermodynamische Potenzial gelten die Beziehungen

$$T = \frac{\partial W}{\partial S} \qquad (2)$$

und

$$U = \frac{\partial W}{\partial Q} \qquad (3)$$

Die Größen S und Q werden oftmals auch extensive Variablen genannt, weil sie mengenmäßig auftreten. Die Größen T und U werden hingegen intensive Variablen genannt, weil sie keinen mengenhaften Charakter haben.

Bei der inneren Energie W sind die Entropie S und die Ladungsmenge Q unabhängige Variablen, während die Temperatur T und die Spannung U abhängige Variablen sind, die als Funktionen der Entropie S und der Ladungsmenge Q dargestellt werden.

Aus der Thermodynamik ist bekannt, dass diese Funktionen nicht unabhängig voneinander sind. Vielmehr müssen sie die Cauchy-Schwarz-Bedingung erfüllen:

$$\frac{\partial T}{\partial Q} = \frac{\partial^2 W}{\partial S \partial Q} = \frac{\partial^2 W}{\partial Q \partial S} = \frac{\partial U}{\partial S} \tag{4}$$

Aufgrund des Umstands, dass die Funktionen die Cauchy-Schwarz-Bedingung erfüllen müssen, ist es prinzipiell unmöglich, einen elektrischen Energiespeicher zu laden oder zu entladen, ohne auch dessen Temperatur zu ändern (oder Wärmeenergie zuzuführen oder abzuführen). Zur Klarstellung wird darauf hingewiesen, dass mit Temperaturänderungen an dieser Stelle nicht irreversible Verluste gemeint sind, die immer in Wärme umgewandelt werden. Vielmehr tritt eine derartige Temperaturänderung auch dann auf, wenn keinerlei Verluste auftreten. Ebenso ist es unmöglich, die Temperatur des elektrischen Energiespeichers zu ändern, ohne zugleich auch dessen Leerlaufspannung zu ändern (oder elektrische Ladung zuzuführen oder abzuführen).

Für Redox-Flow-Akkumulatoren gilt beispielsweise die Nernst-Gleichung

$$E = E0 + \frac{RT}{zF} \cdot \ln\left(aOx / a\mathrm{Re}d\right) \tag{5}$$

In Gleichung 5 ist E das Elektrodenpotenzial. E0 ist das Standardelektrodenpotenzial. R ist die molare Gaskonstante. Sie weist den Wert R = 8,31447 J/molK auf. z ist - bezogen auf ein einzelnes Atom - die Anzahl an übertragenen Elektronen, also dessen Wertigkeit. F ist die Faraday-Konstante. Sie weist den Wert F = 96485 As/mol auf. aOx und aRed sind die Aktivitäten der Redox-Partner. Sie können gegebenenfalls temperaturabhängig sein. Für kleine Konzentrationen können anstelle der Aktivitäten auch die Stoffmengenkonzentrationen eingesetzt werden.

Gemäß Gleichung 5 steigen unter der Bedingung, dass die Aktivitäten aOx und aRed unabhängig von der Temperatur sind, das Elektrodenpotenzial und damit auch die Spannung mit zunehmender Temperatur linear an. Damit ist die partielle Ableitung der Spannung nach der Entropie positiv. Weiterhin ist damit auch die partielle Ableitung der Temperatur nach der Ladungsmenge positiv. Dies bedeutet, dass ein Laden des elektrischen Energiespeichers eine Erwärmung bewirkt, ein Entladen eine Abkühlung.

Vorstehend wurde die Vorgehensweise der reinen Theorie erläutert, bei welcher das thermodynamische Potenzial die innere Energie des elektrischen Energiespeichers ist, so dass die Temperatur sich als Ableitung der inneren Energie nach der in dem elektrischen Energiespeicher enthaltenen Entropie ergibt und die elektrische Spannung sich als Ableitung der inneren Energie nach der in dem elektrischen Energiespeicher gespeicherten Ladungsmenge ergibt. In der Praxis ist es jedoch oftmals von Vorteil, als thermodynamisches Potenzial ein anderes Potenzial zu verwenden, nämlich die sogenannte Coenergie. Die Coenergie V ergibt sich durch eine sogenannte Legendretransformation aus der inneren Energie W gemäß der Beziehung

$$V := W - T \cdot S \tag{6}$$

Bei der Coenergie V des elektrischen Energiespeichers ergibt sich somit die in dem elektrischen Energiespeicher enthaltene Entropie S aus der Ableitung der Coenergie V nach der Temperatur T des elektrischen Energiespeichers und ergibt sich weiterhin die elektrische Spannung U als Ableitung der Coenergie V nach der in elektrischen Energiespeicher gespeicherten Ladungsmenge Q:

$$S = -\frac{\partial V}{\partial T} \tag{7}$$

und

$$U = \frac{\partial V}{\partial Q} \tag{8}$$

Bei der Coenergie V sind die Temperatur T und die Ladungsmenge Q unabhängige Variablen, während die Entropie S und die Spannung U abhängige Variablen sind, die als Funktionen der Temperatur T und der Ladungsmenge Q dargestellt werden.

Die Verwendung der Coenergie kann gegenüber der Verwendung der inneren Energie Vorteile haben, weil die Temperatur einfacher gemessen werden kann als eine zugeführte Wärmemenge und damit weder die Wärmemenge noch die Wärmeenthalpie - die beide relativ schwer erfassbar und messbar sind - explizit benötigt wird. Die Verwendung der Coenergie ist weiterhin vor allem dann von Vorteil, wenn der elektrische Energiespeicher aktiv auf einer bestimmten Temperatur gehalten wird, so dass eine von den fließenden Wärmemengen oder Wärmeenthalpien weitestgehend unabhängige Temperatur vorliegt. Ein weiterer Vorteil besteht darin, dass es vor allem auf einen Wirkbereich ankommt, in dem die elektrochemische Reaktion stattfindet. Welche Temperaturen in anderen Bereichen des elektrischen Energiespeichers herrschen, ist hingegen oftmals von untergeordneter Bedeutung oder sogar irrelevant.

Auch für die Coenergie V gilt, dass sie die Cauchy-Schwarz-Bedingung erfüllen muss:

$$-\frac{\partial S}{\partial Q} = \frac{\partial^2 V}{\partial T \partial Q} = \frac{\partial^2 V}{\partial Q \partial T} = \frac{\partial U}{\partial T} \tag{9}$$

Bei Verwendung der Coenergie ist besser erkennbar, dass die partielle Ableitung der Leerlaufspannung nach der Temperatur größer als 0 ist, wenn die Leerlaufspannung mit zunehmender Temperatur steigt. Dementsprechend muss die partielle Ableitung der Entropie nach der gespeicherten Ladungsmenge negativ sein.

Theoretisch ist es denkbar, als thermodynamisches Potenzial ein wieder anderes Potenzial zu verwenden. Dieses thermodynamische Potenzial wird nachstehend als weitere Coenergie X bezeichnet. Die weitere Coenergie X ergibt sich durch eine andere Legendretransformation aus der inneren Energie W, nämlich gemäß der Beziehung

$$X := W - U \cdot Q \tag{10}$$

Bei der weiteren Coenergie X des elektrischen Energiespeichers ergibt sich die in dem elektrischen Energiespeicher enthaltene Ladungsmenge Q aus der Ableitung der weiteren Coenergie X nach der Spannung U des elektrischen Energiespeichers und ergibt sich weiterhin die Temperatur T als Ableitung der weiteren Coenergie X nach der in elektrischen Energiespeicher enthaltenen Entropie S:

$$Q = -\frac{\partial X}{\partial U} \tag{11}$$

und

$$T = \frac{\partial X}{\partial S} \tag{12}$$

Auch für die weitere Coenergie X gilt, dass sie die Cauchy-Schwarz-Bedingung erfüllen muss:

$$-\frac{\partial Q}{\partial S} = \frac{\partial^2 X}{\partial U \partial S} = \frac{\partial^2 X}{\partial S \partial U} = \frac{\partial T}{\partial U} \tag{13}$$

Die weitere Coenergie X wird jedoch in der Praxis meist nicht verwendet, auch wenn dies theoretisch möglich ist.

Im Regelfall wird die elektrische Spannung bei einem Anstieg der Temperatur ebenfalls ansteigen. In diesem Fall ist es somit von Vorteil, wenn die Steuereinrichtung den elektrischen Energiespeicher beim Zuführen elektrischer Energie zum elektrischen Energiespeicher auf einer ersten Temperatur und beim Entnehmen elektrische Energie auf einer zweiten Temperatur hält, wobei die erste Temperatur kleiner als die zweite Temperatur ist.

In seltenen Fällen kann die elektrische Spannung bei einem Anstieg der Temperatur absinken. In diesem Fall ist es somit von Vorteil, wenn die Steuereinrichtung den elektrischen Energiespeicher beim Zuführen elektrischer Energie zum elektrischen Energiespeicher auf einer ersten Temperatur und beim Entnehmen elektrische Energie auf einer zweiten Temperatur hält, wobei die erste Temperatur größer als die zweite Temperatur ist.

In beiden Fällen kann man also den elektrischen Energiespeicher alternierend bei der einen Temperatur laden und bei der anderen Temperatur entladen. Sofern der thermische Effekt groß genug ist, kann man dem elektrischen Energiespeicher beim Entladen sogar mehr elektrische Energie entnehmen als zuvor beim Laden aufgewendet wurde. Der elektrische Energiespeicher kann also thermische Energie ohne Umweg über eine mechanische Energie direkt in elektrische Energie umwandeln. Der erfindungsgemäße elektrische Energiespeicher kann sozusagen zwar nicht eine Wärmekraftmaschine, wohl aber eine Wärmestrommaschine bilden. Ein derartiger elektrischer Energiespeicher kann - zumindest in manchen Fällen - auch dann noch elektrische Energie liefern, wenn der Betrieb einer Wärmekraftmaschine mit entsprechenden Temperaturdifferenzen nicht mehr möglich wäre.

Weiterhin ist es möglich, zwei derartige elektrische Energiespeicher derart miteinander zu koppeln, dass die zugehörigen Elektrolytflüssigkeiten zwischen einem Wirkbereich des einen elektrischen Energiespeichers und einem Wirkbereich des anderen elektrischen Energiespeichers zirkulieren. Wenn in diesem Fall einer der beiden Wirkbereiche auf der einen Temperatur und der andere der beiden Wirkbereiche auf der anderen Temperatur gehalten wird, kann gegebenenfalls kontinuierlich elektrische Energie erzeugt werden. Natürlich muss die hierfür erforderliche Wärmeenergie durch Heizaggregate, Kühlaggregate, Wärmetauscher oder andere Einrichtungen zur Verfügung gestellt werden, welche die den jeweiligen Wirkbereich durchströmenden Elektrolytflüssigkeiten auf ihren jeweiligen Temperaturen halten.

Die Aufgabe wird weiterhin durch ein Steuerprogramm mit den Merkmalen des Anspruchs 6 gelöst. Erfindungsgemäß bewirkt die Abarbeitung des Maschinencodes durch die Steuereinrichtung, dass die Steuereinrichtung den elektrischen Energiespeicher gemäß einem erfindungsgemäßen Betriebsverfahren steuert.

Die Aufgabe wird weiterhin durch eine Steuereinrichtung mit den Merkmalen des Anspruchs 7 gelöst. Erfindungsgemäß ist die Steuereinrichtung mit einem erfindungsgemäßen Steuerprogramm programmiert, so dass die Steuereinrichtung bei Abarbeitung des Maschinencodes des Steuerprogramms den elektrischen Energiespeicher gemäß einem erfindungsgemäßen Betriebsverfahren steuert.

Die Aufgabe wird weiterhin durch einen elektrischen Energiespeicher mit den Merkmalen des Anspruchs 8 gelöst. Erfindungsgemäß ist die Steuereinrichtung als erfindungsgemäße Steuereinrichtung ausgebildet.

Kurze Beschreibung der Zeichnungen

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung eines Ausführungsbeispiels, das im Zusammenhang mit den Zeichnungen näher erläutert wird. Dabei zeigen:

FIG 1    einen elektrischen Energiespeicher
FIG 2    eine Steuerungsstruktur,
FIG 3    ein Ablaufdiagramm und
FIG 4    ein weiteres Ablaufdiagramm.

Beschreibung der Ausführungsformen

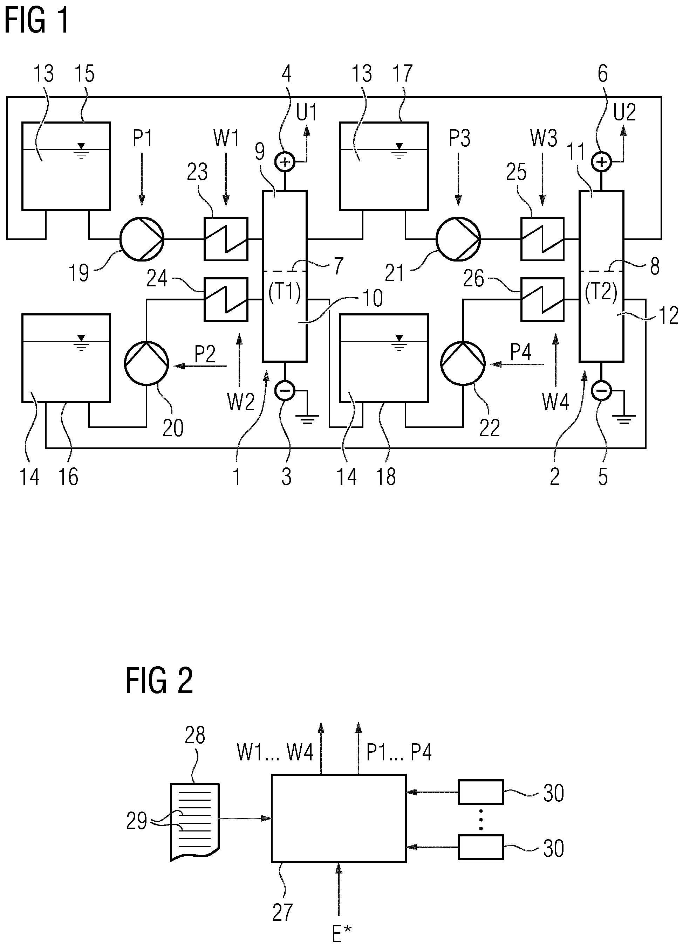

FIG 1 zeigt schematisch und rein beispielhaft einen möglichen Aufbau eines elektrischen Energiespeichers.

Gemäß FIG 1 weist ein elektrischer Energiespeicher zwei Reaktionsräume 1, 2 auf. Die beiden Reaktionsräume 1, 2 weisen jeweils zwei Pole 3, 4 bzw. 5, 6 auf. An den Polen 3, 4 bzw. 5, 6 ist eine jeweilige Spannung U1, U2 abgreifbar. Die beiden Reaktionsräume 1, 2 weisen weiterhin jeweils eine Membran 7, 8 auf. Die jeweilige Membran 7, 8 trennt den jeweiligen Reaktionsraum 1, 2 in zwei Fluidräume 9, 10 bzw. 11, 12. Die Membranen 7, 8 sind zwar für einen Übergang elektrischer Ladungsträger (meist Elektronen) zwischen den Fluidräumen 9, 10 bzw. 11, 12 des jeweiligen Reaktionsraums 1, 2 permeabel. Sie sind hingegen nicht permeabel für in den Fluidräumen 9 bis 12 befindliche Elektrolytflüssigkeiten 13, 14.

Der elektrische Energiespeicher weist weiterhin Speichergefäße 15 bis 18 auf, die über Pumpen 19 bis 22 und Wärmetauscher 23 bis 26 mit den Reaktionsräumen 1, 2 verbunden sind.

In den Fluidräumen 9 bis 12 laufen chemische Redoxreaktionen ab, so dass die Elektrolytflüssigkeiten 13, 14 in den Fluidräumen 9 bis 12 oxidiert oder reduziert werden. Wenn die Elektrolytflüssigkeit 13 den Fluidraum 9 durchfließt, wird sie entweder oxidiert oder reduziert. Wenn die Elektrolytflüssigkeit 13 im Fluidraum 9 oxidiert wird, wird die Elektrolytflüssigkeit 14 im Fluidraum 10 reduziert, wird die Elektrolytflüssigkeit 13 im Fluidraum 11 reduziert und wird die Elektrolytflüssigkeit 14 im Fluidraum 12 oxidiert. Wenn die Elektrolytflüssigkeit 13 im Fluidraum 9 hingegen reduziert wird, wird die Elektrolytflüssigkeit 14 im Fluidraum 10 oxidiert, wird die Elektrolytflüssigkeit 13 im Fluidraum 11 oxidiert und wird die Elektrolytflüssigkeit 14 im 12 reduziert.

Wenn - beispielsweise - der elektrische Energiespeicher als Vanadium-Redox-Flow-Batterie ausgebildet ist, erfolgen in den Fluidräumen 9 bis 12 die (umkehrbaren) chemischen Reaktionen

$$VO^{2+} + H_2O \leftrightarrow VO_2^+ + 2H^+ + e^- \qquad (14)$$

und

$$V^{3+} + e^- \leftrightarrow V^{2+} \qquad (15)$$

Um die chemischen Reaktionen im gewünschten Umfang zu bewirken, werden zum einen die Pumpen 19 bis 22 mit entsprechenden Steuersignalen P1 bis P4 beaufschlagt, so dass den Fluidräumen 9 bis 12 die erforderlichen Mengen an Elektrolytflüssigkeiten 13, 14 zugeführt werden. Weiterhin werden die Wärmetauscher 23 bis 26 mit entsprechenden Steuersignalen W1 bis W4 beaufschlagt, so dass die entsprechenden Mengen an Elektrolytflüssigkeiten 13, 14 eine Temperatur T1 bzw. eine Temperatur T2 aufweisen. Die Temperatur T1 ist kleiner als die Temperatur T2. Entsprechend den geförderten Mengen an Elektrolytflüssigkeiten 13, 14 stellen sich weiterhin in den Speichergefäßen 15 bis 18 Füllstände F1 bis F4 ein.

Die Ausgestaltung der Wärmetauscher 23 bis 26 kann nach Bedarf sein. Beispielsweise kann den Wärmetauschern 23 bis 26 ein jeweiliges Fluid mit geeigneter Temperatur T1, T2 zugeführt werden, wobei, soweit erforderlich, auch die Menge an zugeführtem Fluid eingestellt werden kann.

Über einen der Reaktionsräume 1, 2 wird dem elektrischen Energiespeicher elektrische Energie zugeführt. Über den anderen der Reaktionsräume 1, 2 wird dem elektrischen Energiespeicher elektrische Energie entnommen. Im Regelfall wird es so sein, dass die elektrische Spannung U1, U2 des jeweiligen Reaktionsraums 1, 2 bei einem Anstieg der Temperatur T1, T2 ebenfalls ansteigt. In diesem Fall wird dem elektrischen Energiespeicher die elektrische Energie über den Reaktionsraum 1 zugeführt und über den Reaktionsraums 2 entnommen. Bei bestimmten Elektrolytflüssigkeiten 13, 14 kann jedoch ausnahmsweise auch der umgekehrte Fall auftreten, dass die elektrische Spannung U1, U2 des jeweiligen Reaktionsraums 1, 2 bei einem Anstieg der Temperatur T1, T2 absinkt. In diesem Fall wird dem elektrischen Energiespeicher die elektrische Energie über den Reaktionsraum 2 zugeführt und über den Reaktionsraum 1 entnommen.

Es ist möglich, ausschließlich die Pumpen 19 und 20 und die zugehörigen Wärmetauscher 23 und 24 zu betreiben. In diesem Fall ist nur der Reaktionsraum 1 aktiv, nicht aber der Reaktionsraum 2. In diesem Fall wird der elektrische Energiespeicher ausschließlich geladen (Regelfall) oder ausschließlich entladen (Ausnahme). Alternativ ist es möglich, ausschließlich die Pumpen 21 und 22 und die zugehörigen Wärmetauscher 25 und 26 zu betreiben. In diesem Fall ist nur der Reaktionsraum 2 aktiv, nicht aber der Reaktionsraum 1. In diesem Fall wird der elektrische Energiespeicher ausschließlich entladen (Regelfall) oder ausschließlich geladen (Ausnahme). Wiederum alternativ ist es möglich, sowohl die Pumpen 19 und 20 und die zugehörigen Wärmetauscher 23 und 24 als auch die Pumpen 21 und 22 und die zugehörigen Wärmetauscher 25 und 26 zu betreiben, wobei der Betrieb aller Pumpen 19 bis 22 gleichartig ist. In diesem Fall sind beide Reaktionsräume 1, 2 in gleichem Ausmaß aktiv, so dass der elektrische Energiespeicher weder geladen noch entladen wird. Aufgrund der voneinander verschiedenen Temperaturen T1, T2 kann dem elektrischen Energiespeicher jedoch dennoch elektrische Energie entnommen werden. Weiterhin ist es möglich, zwar sowohl die Pumpen 19 und 20 und die zugehörigen Wärmetauscher 23 und 24 als auch die Pumpen 21 und 22 und die zugehörigen Wärmetauscher 25 und 26 zu betreiben, wobei jedoch der Betrieb der Pumpen 19 und 20 (und der zugehörigen Wärmetauscher 23 und 24) sich vom Betrieb der Pumpen 21 und 22 (und der zugehörigen Wärmetauscher 25, 26) unterscheidet. In diesem Fall erfolgt ein Mischbetrieb zwischen dem reinen Laden des elektrischen Energiespeichers und der Generierung elektrischer Energie bzw. zwischen der Generierung elektrischer Energie und dem reinen Entladen des elektrischen Energiespeichers.

Nachstehend wird in Verbindung mit den FIG 2 bis 4 das erfindungsgemäße Betriebsverfahren näher erläutert. Hierbei wird auf die Ausgestaltung des elektrischen Energiespeichers gemäß FIG 1 Bezug genommen. Die Bezugnahme auf FIG 1 dient jedoch lediglich der Veranschaulichung. Die Vorgehensweise der FIG 2 bis 4 ist - wenn auch mit gewissen Abwandlungen bezüglich der konkreten Steuersignale - auch bei anderen elektrischen Energiespeichern realisierbar.

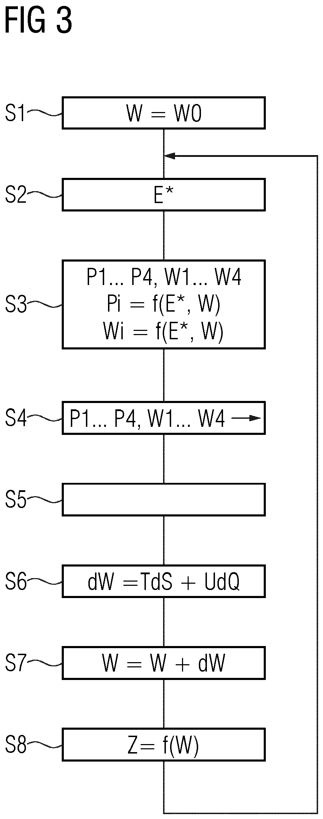

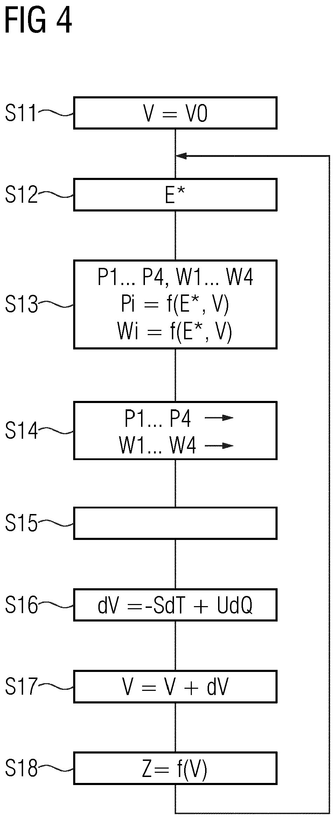

Gemäß FIG 2 weist der elektrische Energiespeicher eine Steuereinrichtung 27 auf. Von der Steuereinrichtung 27 wird der elektrische Energiespeicher gesteuert. Die Steuereinrichtung 27 ist mit einem Steuerprogramm 28 programmiert. Das Steuerprogramm 28 umfasst Maschinencode 29, der von der Steuereinrichtung 27 abarbeitbar ist. Die Programmierung der Steuereinrichtung 27 mit dem Steuerprogramm 28 bzw. die Abarbeitung des Maschinencodes 29 durch die Steuereinrichtung 27 bewirkt, dass die Steuereinrichtung 27 den elektrischen Energiespeicher gemäß einem Betriebsverfahren steuert, das nachstehend in Verbindung mit FIG 3 näher erläutert wird. FIG 4 zeigt eine alternative Ausgestaltung des Betriebsverfahrens, die gleichwertig zu der Vorgehensweise von FIG 3 ist und in manchen Fällen sogar vorzuziehen ist.

Gemäß FIG 3 bestimmt die Steuereinrichtung 27 in einem Schritt S1 einen Anfangswert W0 für ein thermodynamisches Potenzial und setzt den Wert W des thermodynamischen Potenzials auf diesen Anfangswert W0. Konkret wird im Schritt S1 als thermodynamisches Potenzial die innere Energie des elektrischen Energiespeichers verwendet. Für die Ermittlung des Anfangswertes W0 kann man beispielsweise von einer anfänglichen Ladung Q0 und einer anfänglichen Entropie S0 ausgehen und diese Werte in die Funktion W0 = W(S0, Q0) einsetzen.

In einem Schritt S2 nimmt die Steuereinrichtung 27 einen Wert E* für eine gewünschte elektrische Energiemenge entgegen, die dem elektrischen Energiespeicher zugeführt werden soll. Werte E* kleiner als 0 korrespondieren mit einer elektrischen Energiemenge, die dem elektrischen Energiespeicher entnommen werden soll.

In einem Schritt S3 ermittelt die Steuereinrichtung 27 Steuerbefehle, mittels derer der elektrische Energiespeicher gesteuert werden soll. Beispielsweise kann die Steuereinrichtung 27 im Schritt S3 die Steuersignale P1 bis P4 und W1 bis W4 für die Pumpen 19 bis 22 und die Wärmetauscher 23 bis 26 ermitteln. Die Ermittlung der Steuerbefehle erfolgt - selbstverständlich - unter Verwertung der gewünschten elektrischen Energiemenge E* und weiterhin unter Verwertung des Wertes W des thermodynamischen Potenzials.

In einem Schritt S4 steuert die Steuereinrichtung 27 den elektrischen Energiespeicher entsprechend der ermittelten Steuerbefehle an.

In einem Schritt S5 nimmt die Steuereinrichtung 27 Informationen entgegen, die für eine dem elektrischen Energiespeicher zugeführte elektrische Energie und eine dem elektrischen Energiespeicher zugeführte Wärmemenge charakteristisch sind. Die Informationen werden gemäß FIG 2 von Informationseinrichtungen 30 generiert, die ebenfalls Bestandteil des elektrischen Energiespeichers sind. Die Steuereinrichtung 27 ist zum Entgegennehmen der entsprechenden Informationen mit den Informationseinrichtungen 30 datentechnisch verbunden.

Die Informationseinrichtungen 30 können beispielsweise an geeigneten Stellen des elektrischen Energiespeichers von FIG 1 angeordnet sein und - rein beispielhaft - die Spannungen U1, U2, zugehörige elektrische Ströme I1, I2, die Temperaturen T1, T2 der Elektrolytflüssigkeiten 13, 14 in den Reaktionsräumen 1, 2 und andere mehr erfassen. Auch den Wärmetauschern 23 bis 26 zugeführte Fluidmengen können gegebenenfalls erfasst werden. Es kann sich nach Bedarf um Sollgrößen oder um Istgrößen handeln. Positive elektrische Ströme korrespondieren mit einem Zuführen von elektrischer Ladung zum Energiespeicher, negative elektrische Ströme mit einem Entnehmen elektrischer Ladung aus dem Energiespeicher.

Die Informationseinrichtungen 30 sind in FIG 1 nicht dargestellt. Der Aufbau, die Wirkungsweise und auch die sachgemäße Anordnung derartiger Informationseinrichtungen 30 sind Fachleuten allgemein bekannt und müssen daher nicht im einzelnen erläutert werden.

Soweit es sich bei den im Schritt S5 entgegengenommenen Größen um Sollgrößen handelt, kann der Schritt S5 teilweise bereits durch den Schritt S2 implementiert sein.

In einem Schritt S6 ermittelt die Steuereinrichtung 27 unter Verwertung der ihr zugeführten Informationen eine Änderung dW des Wertes W des thermodynamischen Potenzials. Die Änderung ist sowohl von der dem elektrischen Energiespeicher zugeführten elektrischen Energie als auch von der dem elektrischen Energiespeicher zugeführten Wärmemenge abhängig. Konkret ermittelt die Steuereinrichtung 27 die Änderung dW im Schritt S6 gemäß der Beziehung

$$dW = TdS + UdQ \qquad\qquad (16)$$

T ist die Temperatur, S die Entropie. TdS ist die dem elektrischen Energiespeicher zugeführte (inkrementelle) Wärmeenergie. U ist die elektrische Spannung, welche der elektrische Energiespeicher im Leerlauf aufweist, Q die elektrische Ladungsmenge. UdQ ist die dem elektrischen Energiespeicher zugeführte (inkrementelle) elektrische Energie.

In einem Schritt S7 führt die Steuereinrichtung 27 den Wert W des thermodynamischen Potenzials anhand der ermittelten Änderung dW nach.

In einem Schritt S8 ermittelt die Steuereinrichtung 27 eine Zustandsgröße Z des elektrischen Energiespeichers, beispielsweise einen Ladungszustand, einen maximal möglichen Ladestrom, einen Verschleißzustand und andere mehr. Die Ermittlung des Schrittes S8 erfolgt unter Verwertung des ermittelten Wertes W des thermodynamischen Potenzials.

Die Schritte S5 bis S8 können gegebenenfalls für die beiden Reaktionsräume 1, 2 getrennt voneinander ausgeführt werden.

Sodann geht die Steuereinrichtung 27 wieder zum Schritt S2 zurück, so dass die Steuereinrichtung 27 die Schritte S2 bis S7 iterativ immer wieder abarbeitet. Bei der jeweiligen Abarbeitung des Schrittes S3 verwertet die Steuereinrichtung 27 stets den bei der unmittelbar vorherigen Ausführung des Schrittes S7 ermittelten Wert W des thermodynamischen Potenzials.

Alternativ zu den Schritten S6 und S7 kann die Steuereinrichtung 27 auch neue Werte S' = S+dS und Q' = Q+dQ = Q+Idt berechnen und basierend auf den Werten S' und Q' durch Einsetzen in die Funktion W den neuen Wert W' = W(S',Q') berechnen. Dabei berechnet man dS dadurch, dass man die zugeführte Wärmemenge misst und durch die Temperatur T teilt, bei der man die Wärmemenge zugeführt hat.

FIG 4 ist ähnlich zu FIG 3. Der wesentliche Unterschied besteht darin, dass bei dem Ablaufdiagramm gemäß FIG 3 als thermodynamisches Potenzial die innere Energie des elektrischen Energiespeichers verwendet wird, während bei FIG 4 als thermodynamisches Potenzial die Coenergie des elektrischen Energiespeichers verwendet wird.

Gemäß FIG 4 bestimmt die Steuereinrichtung 27 in einem Schritt S11 einen Anfangswert V0 für die Coenergie, d.h. das gemäß FIG 4 verwendete thermodynamische Potenzial, und setzt den Wert V des thermodynamischen Potenzials auf diesen Anfangswert V0. Die Ermittlung des Anfangswertes V0 der Coenergie ist einfacher als die Ermittlung des Anfangswertes W0 der inneren Energie. Denn für die Ermittlung des Anfangswertes V0 werden lediglich die Anfangstemperatur T0 und die Anfangsladung Q0 benötigt. Dann ermittelt man V0 = V(T0, Q0). Die Funktion V ist für den Energiespeicher charakteristisch.

In einem Schritt S12 nimmt die Steuereinrichtung 27 den Wert E* für eine gewünschte elektrische Energiemenge entgegen, die dem elektrischen Energiespeicher zugeführt werden soll. Der Schritt S12 von FIG 4 korrespondiert mit dem Schritt S2 von FIG 3.

In einem Schritt S13 ermittelt die Steuereinrichtung 27 Steuerbefehle, mittels derer der elektrische Energiespeicher gesteuert werden soll. Der Schritt S13 von FIG 4 korrespondiert im wesentlichen mit dem Schritt S3 von FIG 3. Der Unterschied besteht darin, dass bei der Ermittlung der Steuerbefehle anstelle des Wertes W der inneren Energie der Wert V der Coenergie verwertet wird.

In einem Schritt S14 steuert die Steuereinrichtung 27 den elektrischen Energiespeicher entsprechend der ermittelten Steuerbefehle an. Der Schritt S14 von FIG 4 korrespondiert mit dem Schritt S4 von FIG 3.

In einem Schritt S15 nimmt die Steuereinrichtung 27 Informationen entgegen, die für eine dem elektrischen Energiespeicher zugeführte elektrische Energie und eine dem elektrischen Energiespeicher zugeführte Wärmeenthalpie charakteristisch sind. Der Schritt S15 von FIG 4 korrespondiert mit dem Schritt S5 von FIG 3.

In einem Schritt S16 ermittelt die Steuereinrichtung 27 unter Verwertung der ihr zugeführten Informationen eine Änderung dV des Wertes V des thermodynamischen Potenzials. Aufgrund der Verwendung der Coenergie ermittelt die Steuereinrichtung 27 die Änderung dV im Schritt S16 gemäß der Beziehung

$$dV = -SdT + UdQ \tag{17}$$

T ist die Temperatur, S die Entropie. SdT ist die dem elektrischen Energiespeicher zugeführte (inkrementelle) Wärmeenthalpie.

In einem Schritt S17 führt die Steuereinrichtung 27 den Wert V des thermodynamischen Potenzials anhand der ermittelten Änderung dV nach.

Alternativ zur vorliegenden Implementierung der Schritte S16 und S17 wäre es analog zur der erwähnten Alternative zu den Schritten S6 und S7 möglich, die Temperatur T neu zu ermitteln, die Ladung Q neu zu ermitteln und die Coenergie gemäß der Beziehung V = V(T,Q) zu ermitteln.

In einem Schritt S18 ermittelt die Steuereinrichtung 27 eine Zustandsgröße Z des elektrischen Energiespeichers, beispielsweise einen Ladungszustand, einen maximal möglichen Ladestrom, einen Verschleißzustand und andere mehr. Die Ermittlung des Schrittes S8 erfolgt unter Verwertung des ermittelten Wertes V des thermodynamischen Potenzials. Der Schritt S18 von FIG 4 korrespondiert im wesentlichen mit dem Schritt S8 von FIG 3. Der Unterschied besteht darin, dass bei der Ermittlung der Zustandsgröße Z anstelle des Wertes W der Wert V verwertet wird.

Die Schritte S15 bis S18 von FIG 4 können - analog zu den Schritten S5 bis S8 von FIG 3 - gegebenenfalls für die beiden Reaktionsräume 1, 2 getrennt voneinander ausgeführt werden.

Die vorliegende Erfindung weist viele Vorteile auf. Insbesondere ergibt sich aufgrund der verbesserten Modellierung des elektrischen Energiespeichers auch ein verbesserter Betrieb des elektrischen Energiespeichers.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Bezugszeichenliste

| | |
|---|---|
| 1, 2 | Reaktionsräume |
| 3 bis 6 | Pole |
| 7,8 | Membranen |
| 9 bis 12 | Fluidräume |
| 13, 14 | Elektrolytflüssigkeiten |
| 15 bis 18 | Speichergefäße |
| 19 bis 22 | Pumpen |
| 23 bis 26 | Wärmetauscher |
| 27 | Steuereinrichtung |
| 28 | Steuerprogramm |
| 29 | Maschinencode |
| 30 | Informationseinrichtungen |
| dV, dW | Änderungen |
| E* | gewünschte elektrische Energiemenge |
| F1 bis F4 | Füllstände |

| P1 bis P4 | Steuersignale |
|---|---|
| S1 bis S18 | Schritte |
| T, T1, T2 | Temperaturen |
| U, U1, U2 | Spannungen |
| V, W | Werte |
| V0, W0 | Anfangswerte |
| W1 bis W4 | Steuersignale |

**Patentansprüche**

1. Betriebsverfahren für einen elektrischen Energiespeicher,

   - wobei eine Steuereinrichtung (27) des elektrischen Energiespeichers Informationen entgegennimmt, die für eine dem elektrischen Energiespeicher zugeführte elektrische Energie und eine dem elektrischen Energiespeicher zugeführte Wärmemenge oder Wärmeenthalpie charakteristisch sind,
   - wobei die Steuereinrichtung (27) unter Verwertung der ihr zugeführten Informationen einen Wert (W, V) eines thermodynamischen Potenzials ermittelt,
   - wobei der Wert (W, V) des thermodynamischen Potenzials sich sowohl bei einem Zuführen elektrischer Energie zu dem elektrischen Energiespeicher als auch bei einem Zuführen einer Wärmemenge oder Wärmeenthalpie zu dem elektrischen Energiespeicher ändert und
   - wobei die Steuereinrichtung (27) unter Verwertung des ermittelten Wertes (W, V) des thermodynamischen Potenzials eine Zustandsgröße (Z) des elektrischen Energiespeichers ermittelt und/oder unter Verwertung des ermittelten Wertes (W, V) des thermodynamischen Potenzials Steuerbefehle (P1 bis P4, W1 bis W4), mittels derer der elektrische Energiespeicher gesteuert wird, ermittelt und den elektrischen Energiespeicher entsprechend ansteuert.

2. Betriebsverfahren nach Anspruch 1,
   **dadurch gekennzeichnet,**
   **dass** das thermodynamische Potenzial die innere Energie des elektrischen Energiespeichers ist, so dass die Temperatur (T) sich als Ableitung der inneren Energie nach der in dem elektrischen Energiespeicher enthaltenen Entropie (S) ergibt und die elektrische Spannung (U) sich als Ableitung der inneren Energie nach der in dem elektrischen Energiespeicher gespeicherten Ladungsmenge (Q) ergibt.

3. Betriebsverfahren nach Anspruch 1,
   **dadurch gekennzeichnet,**
   **dass** das thermodynamische Potenzial die Coenergie des elektrischen Energiespeichers ist, so dass die in dem elektrischen Energiespeicher enthaltene Entropie (S) sich aus der Ableitung der Coenergie nach der Temperatur (T) des elektrischen Energiespeichers ergibt und die elektrische Spannung (U) sich als Ableitung der Coenergie nach der in elektrischen Energiespeicher gespeicherten Ladungsmenge (Q) ergibt.

4. Betriebsverfahren nach Anspruch 1, 2 oder 3,
   **dadurch gekennzeichnet,**
   **dass** die elektrische Spannung (U) bei einem Anstieg der Temperatur (T) ebenfalls ansteigt, dass die Steuereinrichtung (27) den elektrischen Energiespeicher beim Zuführen elektrischer Energie zum elektrischen Energiespeicher auf einer ersten Temperatur (T1) und beim Entnehmen elektrische Energie auf einer zweiten Temperatur (T2) hält und dass die erste Temperatur (T1) kleiner als die zweite Temperatur (T2) ist.

5. Betriebsverfahren nach Anspruch 1, 2 oder 3,
   **dadurch gekennzeichnet,**
   **dass** die elektrische Spannung (U) bei einem Anstieg der Temperatur (T) absinkt, dass die Steuereinrichtung (27) den elektrischen Energiespeicher beim Zuführen elektrischer Energie zum elektrischen Energiespeicher auf einer ersten Temperatur (T1) und beim Entnehmen elektrische Energie auf einer zweiten Temperatur (T2) hält und dass die erste Temperatur (T1) größer als die zweite Temperatur (T2) ist.

6. Steuerprogramm für eine Steuereinrichtung (27) für einen elektrischen Energiespeicher, wobei das Steuerprogramm Maschinencode (29) umfasst, der von der Steuereinrichtung (27) abarbeitbar ist, wobei die Abarbeitung des Maschinencodes (29) durch die Steuereinrichtung (27) bewirkt, dass die Steuereinrichtung (27) den elektrischen Energiespeicher gemäß einem Betriebsverfahren nach einem der obigen Ansprüche steuert.

7. Steuereinrichtung für einen elektrischen Energiespeicher, wobei die Steuereinrichtung mit einem Steuerprogramm (28) nach Anspruch 6 programmiert ist, so dass die Steuereinrichtung bei Abarbeitung des Maschinencodes (29) des Steuerprogramms (28) den elektrischen Energiespeicher gemäß einem Betriebsverfahren nach einem der Ansprüche 1 bis 5 steuert.

8. Elektrischer Energiespeicher,

   - wobei der elektrische Energiespeicher Informationseinrichtungen (30) aufweist, von denen Informationen generierbar sind, die für eine dem elektrischen Energiespeicher zugeführte elektrische Energie und eine dem elektrischen Energiespeicher zugeführte Wärmemenge oder Wärmeenthalpie charakteristisch sind,
   - wobei der elektrische Energiespeicher eine Steuereinrichtung (27) aufweist, die zum Entgegennehmen der von den Informationseinrichtungen (30) generierten Informationen mit den Informationseinrichtungen (30) datentechnisch verbunden ist,
   - wobei die Steuereinrichtung (27) als Steuereinrichtung nach Anspruch 7 ausgebildet ist.

FIG 1

FIG 2

# FIG 3

S1 — $\boxed{W = W0}$

S2 — $\boxed{E^*}$

S3 — $\boxed{\begin{array}{c} P1... P4, W1... W4 \\ Pi = f(E^*, W) \\ Wi = f(E^*, W) \end{array}}$

S4 — $\boxed{P1... P4, W1... W4 \rightarrow}$

S5 — $\boxed{\phantom{XXXXXX}}$

S6 — $\boxed{dW = TdS + UdQ}$

S7 — $\boxed{W = W + dW}$

S8 — $\boxed{Z = f(W)}$

# FIG 4

| | |
|---|---|
| S11 | V = V0 |
| S12 | E* |
| S13 | P1... P4, W1... W4<br>Pi = f(E*, V)<br>Wi = f(E*, V) |
| S14 | P1... P4 →<br>W1... W4 → |
| S15 | |
| S16 | dV =-SdT + UdQ |
| S17 | V = V + dV |
| S18 | Z= f(V) |

Europäisches
Patentamt

European
Patent Office

Office européen
des brevets

# EUROPÄISCHER RECHERCHENBERICHT

Nummer der Anmeldung

EP 23 17 5592

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 841 956 B1 (CALIFORNIA INST OF TECHN [US]; CENTRE NAT RECH SCIENT [FR] ET AL.) 13. Februar 2019 (2019-02-13) | 1,2,4,5 | INV. H01M8/18 G05F5/00 |
| Y | * Ansprüche 1,19-20,23-24 * | 6-8 | |
| A | * Absatz [0007] * | 3 | |
| | * Absatz [0045] * | | |
| | * Absatz [0104] * | | |
| | * Absatz [0128] – Absatz [0130] * | | |
| | * Absatz [0137] – Absatz [0144] * | | |
| | * Absatz [0146] – Absatz [0147] * | | |
| | * Absatz [0150] – Absatz [0154] * | | |
| | ----- | | |
| X | EP 1 924 849 B1 (CALIFORNIA INST OF TECHN [US]; CENTRE NAT RECH SCIENT [FR]) 25. Juli 2018 (2018-07-25) | 1 | |
| | * Ansprüche 1,4,6,15-17,19-21,23-24 * | | |
| | * Absatz [0006] * | | |
| | * Absatz [0063] * | | |
| | ----- | | |
| X | US 2017/229891 A1 (LEE SANG-GUG [KR] ET AL) 10. August 2017 (2017-08-10) | 1 | |
| | * Ansprüche 1-20 * | | RECHERCHIERTE SACHGEBIETE (IPC) |
| | ----- | | |
| Y | EP 3 536 411 B1 (PRIMETALS TECHNOLOGIES GERMANY GMBH [DE]) 18. November 2020 (2020-11-18) | 6-8 | H01M G05F H04N |
| | * Absätze [0002], [0040] * | | |
| | ----- | | |

Der vorliegende Recherchenbericht wurde für alle Patentansprüche erstellt

| Recherchenort | Abschlußdatum der Recherche | Prüfer |
|---|---|---|
| München | 13. November 2023 | Bossa, Christina |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

......................................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**     EP 23 17 5592

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-11-2023

| Im Recherchenbericht angeführtes Patentdokument | Datum der Veröffentlichung | Mitglied(er) der Patentfamilie | Datum der Veröffentlichung |
|---|---|---|---|
| EP 2841956 B1 | 13-02-2019 | CN 104471415 A | 25-03-2015 |
| | | EP 2841956 A2 | 04-03-2015 |
| | | JP 6368707 B2 | 01-08-2018 |
| | | JP 2015522899 A | 06-08-2015 |
| | | SG 11201406940Y A | 27-11-2014 |
| | | US 2013322488 A1 | 05-12-2013 |
| | | WO 2014021957 A2 | 06-02-2014 |
| EP 1924849 B1 | 25-07-2018 | CN 101365941 A | 11-02-2009 |
| | | CN 102569919 A | 11-07-2012 |
| | | EP 1924849 A2 | 28-05-2008 |
| | | JP 5368091 B2 | 18-12-2013 |
| | | JP 5690802 B2 | 25-03-2015 |
| | | JP 2009506483 A | 12-02-2009 |
| | | JP 2013069695 A | 18-04-2013 |
| | | US 2007182418 A1 | 09-08-2007 |
| | | WO 2007117263 A2 | 18-10-2007 |
| US 2017229891 A1 | 10-08-2017 | KR 20170093482 A | 16-08-2017 |
| | | US 2017229891 A1 | 10-08-2017 |
| EP 3536411 B1 | 18-11-2020 | CN 111801173 A | 20-10-2020 |
| | | EP 3536411 A1 | 11-09-2019 |
| | | US 2021046529 A1 | 18-02-2021 |
| | | WO 2019170381 A1 | 12-09-2019 |

EPO FORM P0461

Für nähere Einzelheiten zu diesem Anhang : siehe Amtsblatt des Europäischen Patentamts, Nr.12/82